# EUROPÄISCHE PATENTSCHRIFT

(11) **EP 2 596 988 B1**
(45) Veröffentlichungstag und Bekanntmachung des Hinweises auf die Patenterteilung: **08.04.2020**
(21) Anmeldenummer: 12189593.2
(22) Anmeldetag: 23.10.2012
(51) Int. Cl.: B60Q 1/076, B60Q 1/12, F21S 41/147, F21S 45/43

(54) **Kurvenlichtmodul für einen Kraftfahrzeugscheinwerfer**
Adaptive light module for a motor vehicle headlamp
Module lumineux en courbe pour un phare de véhicule automobile

(30) Priorität: 28.11.2011 DE 102011087247
(43) Veröffentlichungstag der Anmeldung: 29.05.2013
(73) Patentinhaber: Automotive Lighting Reutlingen GmbH, 72762 Reutlingen (DE)
(72) Erfinder: Braun, Stephan, 70771 Echterdingen (DE); Schauwecker, Friedrich, Dipl.-Ing., 72793 Pfullingen (DE)
(74) Vertreter: DREISS Patentanwälte PartG mbB

(56) Entgegenhaltungen:
- EP-A1- 1 881 262
- EP-A2- 1 920 972
- EP-A2- 2 298 602
- DE-A1- 10 217 191
- DE-A1-102007 043 961
- DE-U1-202008 005 444

## Beschreibung

Die vorliegende Erfindung betrifft ein Kurvenlichtmodul für einen Kraftfahrzeugscheinwerfer nach dem Oberbegriff des Anspruchs 1.

Ein solches Kurvenlichtmodul ist aus der EP 1 920 972 A2 bzw. EP 2 298 602 A2 bekannt. Derartige Kurvenlichtmodule sind dienen dazu, bei einer Kurvenfahrt den Kraftfahrzeugscheinwerfer, der bei einer Geradeausfahrt im wesentlichen parallel zur Längsachse des Kraftfahrzeugs ausgerichtet ist, stärker zur Innenseite der Kurve auszurichten, um die gekrümmt verlaufende Fahrbahn im Vorfeld des Kraftfahrzeugs besser auszuleuchten.

Unter einer Komplexlichtquelle wird dabei in dieser Anmeldung der Teil des Kurvenlichtmoduls verstanden, der als bauliche Einheit zur Erfüllung der Kurvenlichtfunktion verschwenkt wird. Eine solche Komplexlichtquelle enthält insbesondere die eigentliche Lichtquelle, sei es eine Halbleiterlichtquelle, eine Glühlampe, eine Gasentladungslampe oder eine sonstige Lichtquelle, und ein optisches System, das aus dem Licht der Lichtquelle die gewünschte Lichtverteilung vor dem Scheinwerfer erzeugt.

Die schwenkbaren Teile von weiteren bekannten Kurvenlichtmodulen werden in einer starren Lagergeometrie im Schwenkrahmen gelagert. Die Lagerung erfolgt zum Beispiel dadurch, dass mit der Komplexlichtquelle starr verbundene und längs der Schwenkachse im Idealfall fluchtend angeordnete Lagerstifte in starr mit dem Schwenkrahmen verbundenen und im Idealfall fluchtenden Gleitlagerbuchsen gelagert sind.

Aufgrund von Fluchtungsfehlern der Lagerungen und aufgrund von Lagerspielverringerungen beim Betrieb des Kurvenlichtmoduls bei tiefen Temperaturen entstehen erhöhte Reibungswiderstände und Ungenauigkeiten innerhalb der Lagerungen.

Die Aufgabe der Erfindung besteht darin, die durch Fluchtungsfehler bedingten erhöhten Reibungswiderstände zu verringern und das für eine erwünscht geringe Reibung erforderliche Lagerspiel im gesamten abzudeckenden Temperaturbereich, also insbesondere auch im Bereich tiefer Temperaturen, zu gewährleisten.

Diese Aufgabe wird mit den Merkmalen des Anspruchs 1 gelöst.

Die Erfindung basiert zunächst auf der Erkenntnis, dass die erhöhte Reibung häufig durch nicht fluchtende Lagerungen der Komplexlichtquelle in dem Schwenkrahmen verursacht wird. Die nicht fluchtenden Lagerungen treten insbesondere, aber nicht nur, bei Schwenkrahmen und/oder Trägerelementen der Komplexlichtquelle auf, die zumindest zum Teil aus Kunststoff bestehen und durch ein Spritzgussverfahren hergestellt werden. Beim Abkühlen der Spritzgussteile tritt ein mit sinnvollem Aufwand nicht vermeidbarer Verzug auf, der häufig dazu führt, dass die Lagerungen nicht ganz genau fluchten.

Nicht fluchtende Lagerungen führen beim Stand der Technik insbesondere dazu, dass die Komplexlichtquelle und der Schwenkrahmen beim Zusammenfügen gegeneinander verspannt werden. Als Folge sitzen dann die Lagerstifte schief in den starren Gleitlagerhülsen. Die Verspannungskräfte stützen sich dabei in den Lagerungen ab. Aufgrund der Schiefstellung der Lagerstifte in den Gleitlagerhülsen tragen die Lager dann nur auf Bruchteilen ihrer sonst zur Verfügung stehenden Lagerfläche, was bereichsweise zu stark erhöhten Werten der Flächenpressung (pro Flächeneinheit wirksame Kraft) führt. In Verbindung mit den bestimmungsgemäßen Schwenkbewegungen führt die erhöhte Flächenpressung beim Stand der Technik zu erhöhter Reibung und zu einem als Folge der erhöhten Reibung erhöhten Verschleiß. Dieser Effekt tritt vor allem, aber nicht nur, bei tiefen Temperaturen auf, wie sie im Winterbetrieb des Kraftfahrzeugs auftreten. Dort verringert sich das Lagerspiel mit der unerwünschten Folge, dass zum Beispiel eine verzugsbedingte geringe Schiefstellung der Lagerstifte, die bei höheren Temperaturen noch innerhalb des dort vergleichsweise großen Lagerspiels liegt, bei den tieferen Temperaturen zu erhöhter Flächenpressung, damit erhöhter Reibung und damit erhöhtem Verschleiß führt.

Vor diesem Hintergrund besteht die Aufgabe der Erfindung in der Angabe eines Kurvenlichtmoduls, das die beschriebenen Nachteile nicht oder zumindest nur in einem verringerten Ausmaß aufweist. Diese Aufgabe wird mit den Merkmalen des Anspruchs 1 gelöst.

Das erfindungsgemäße Kurvenlichtmodul zeichnet sich dadurch aus, dass wenigstens eine der beiden Lagerungen eine Kalottenlagerung mit einer Kugelkalotten-förmigen Lagerschale, einer Kugel und einem Lagerstift aufweist.

Die Kalottenlagerung besitzt den großen Vorteil, dass die Kugelsymmetrie der Lagerflächen, die bei der Kalottenlagerung durch die Innenseite der Kugelkalotten-förmigen Lagerschale und die Außenseite der Kugel gebildet werden, eine Veränderung der Lage der Kugel in der Lagerschale und damit eine Anpassung der Winkelstellung der Aufnahme des zugehörigen Lagerstiftes in der Kugel an eine Schiefstellung des zugehörigen Lagerstiftes erlaubt. Die Kugel muss sich dazu in ihrer Kugelkalotten-förmigen Lagerschale nur etwas drehen. Zwar stützen sich auch bei dieser Art der Lagerung die zwischen der Komplexlichtquelle und dem Schwenkrahmen wirksamen Verspannungskräfte in den Lagerungen ab, diese Abstützung führt aber wegen der Bewegungsfreiheitsgrade der Kugel in der Lagerschale nicht zu einer Konzentration der Kraftwirkung auf kleine Bereiche der Lagerflächen. Die beim Stand der der Technik bei Verspannungen auftretenden hohen Flächenpressungswerte treten daher bei der Erfindung nicht oder nur in einem deutlich verringerten Ausmaß auf. Als Folge reduzieren sich auch die bei Schwenkbewegungen auftretenden Reibungskräfte und damit auch der dadurch hervorgerufene Verschleiß.

Die Kugel weist eine mittige Ausnehmung auf, die als Gleitlagerhülse dient, in der der erste Lagerstift drehbar gelagert ist. Die Lagerung umfasst daher zwei miteinander in Beziehung stehende einzelne Lagerungen. Von innen nach außen sind dies zunächst eine Gleitlagerung des Lagerstiftes in der mittigen, bevorzugt zylinderförmigen Ausnehmung der Kugel und dann, weiter außen, eine Gleitlagerung der Kugel in der Kalotten-förmigen Lagerschale.

Weitere Vorteile ergeben sich aus den Gegenständen der abhängigen Ansprüche, der Beschreibung und der beigefügten Figuren.

Es versteht sich, dass die vorstehend genannten und in nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Fahrzeugscheinwerfer als technisches Umfeld der Erfindung;
- Fig. 2: einen Querschnitt durch ein Kurvenlichtmodul, das eine bekannte Lagerung aufweist;
- Fig. 3: einen Querschnitt durch einen Teil eines Ausführungsbeispiels eines erfindungsgemäßen Kurvenlichtmoduls; und
- Fig. 4: einen Querschnitt durch ein Ausführungsbeispiel eines erfindungsgemäßen Kurvenlichtmoduls zur Erläuterung von Ausgestaltungen der Erfindung.

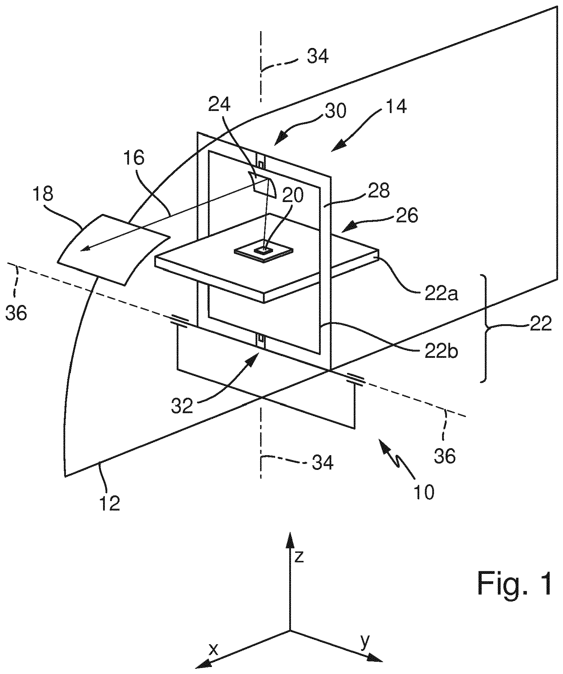

Figur 1 zeigt das technische Umfeld der Erfindung. Im Einzelnen zeigt die Figur 1 einen Kraftfahrzeugscheinwerfer 10 mit einem Scheinwerfergehäuse 12, einem in dem Scheinwerfergehäuse 12 angeordneten Kurvenlichtmodul 14 und einer für Licht 16 durchlässigen Abdeckscheibe 18.

Das Licht 16 wird von einer Lichtquelle 20 erzeugt, die in der dargestellten Ausgestaltung eine Halbleiterlichtquelle, insbesondere eine Anordnung aus mehreren Leuchtdioden ist und auf einem als Kühlkörper 22a dienenden Bestandteil eines Trägerelements 22 montiert ist. Das Trägerelement 22 weist darüber hinaus einen Halterahmen 22b auf, der mit dem Kühlkörper 22a starr verbunden ist.

Die Erfindung ist aber nicht auf eine Verwendung in Verbindung mit Halbleiterlichtquellen beschränkt und kann auch mit anderen Lichtquellen, insbesondere Glühlampen oder Gasentladungslampen verwendet werden.

Durch ein optisches System 24 wird das von der Lichtquelle 20 erzeugte Licht 16 gebündelt und gegebenenfalls zusätzlich beeinflusst, um eine gewünschte Lichtverteilung vor dem Kraftfahrzeugscheinwerfer 10 zu erzielen. In der dargestellten Ausgestaltung ist das optische System 24 ein Reflektor. Alternativ oder ergänzend können Blendenanordnungen und/oder Linsen als optische Elemente verwendet werden, um optische Systeme 24 in Form von Reflexionssystemen oder Projektionssystemen zu realisieren und/oder um verschiedene Lichtverteilungen zu erzeugen.

Die verschiedenen Lichtverteilungen unterscheiden sich zum Beispiel dadurch, ob sie eine definierte Hell-Dunkel-Grenze aufweisen oder nicht und gegebenenfalls darin, wie eine solche Hell-Dunkel-Grenze ausgestaltet ist. Unter dem optischen System 24 wird hier die Summe aller optischen Elemente verstanden, die die Intensität und/oder Richtung des von der Lichtquelle 20 emittierten Lichtes bis zu seinem Austritt aus dem Kurvenlichtmodul beeinflussen.

Das Kurvenlichtmodul 14 weist eine Komplexlichtquelle 26 und einen Schwenkrahmen 28 auf. Die Komplexlichtquelle ist dabei eine bauliche Einheit aus der Lichtquelle 20, dem Trägerelement 22 und dem optischen System 24.

Die Komplexlichtquelle 26 ist in einer ersten Lagerung 30 und einer zweiten Lagerung 32 in dem Schwenkrahmen 28 um eine erste Achse 34 schwenkbar aufgehängt.

Die erste Achse 34 ist dabei so ausgerichtet, dass das Kurvenlichtmodul 14 bei seiner bestimmungsgemäßen Verwendung in einem Kraftfahrzeugscheinwerfer 10 durch eine um diese erste Achse 34 herum erfolgende Schwenkbewegung nach rechts und links geschwenkt werden kann, um in Kurven zum Kurveninneren hin gerichtet werden zu können, beziehungsweise um in die Richtung der eingeschlagenen lenkbaren Räder des Kraftfahrzeugs gerichtet zu werden. Die erste Achse 34 wird daher im Allgemeinen bei einer bestimmungsgemäßen Verwendung des Kurvenlichtmoduls 14 parallel zu einer Hochachse des Kraftfahrzeugs ausgerichtet sein. Dies entspricht der in den Figuren angegebenen z-Richtung. Die x-Richtung liegt parallel zu einer Längsachse des Fahrzeugs und die y-Richtung liegt parallel zu einer Hochachse des Fahrzeugs.

Der Stellantrieb, der die Stellkraft zum Verschwenken der Komplexlichtquelle 26 in dem Schwenkrahmen 28 aufbringt, ist bevorzugt ein Elektromotor. Der Stellantrieb ist in einer Ausgestaltung an der Komplexlichtquelle 26 befestigt und stützt sich an dem Schwenkrahmen 28 ab. In einer dazu alternativen Ausgestaltung ist der Stellantrieb an dem Schwenkrahmen 28 befestigt und stützt sich an der Komplexlichtquelle 26 ab.

Die Kurvenlichtfunktion im Allgemeinen und die zu ihrer Verwirklichung erforderlichen Ausgestaltungen optischer Elemente, Schwenkantriebe und Steuerelemente sind dem Fachmann vertraut und bedürfen daher an dieser Stelle keiner weiteren Erläuterung.

In der dargestellten Ausgestaltung ist der Schwenkrahmen 28 mit dem Kurvenlichtmodul 14 in dem Gehäuse 12 zusätzlich um eine zur ersten Achse 34 orthogonale und quer zu einer im Wesentlichen zur x-Richtung parallelen Lichtabstrahlrichtung liegende zweite Achse 36 schwenkbar. Die zweite Achse 36 wird daher im Allgemeinen bei einer bestimmungsgemäßen Verwendung des Kurvenlichtmoduls 14 parallel zu einer Querachse des Kraftfahrzeugs, also parallel zur y-Richtung ausgerichtet sein.

Die Schwenkbarkeit des Kurvenlichtmoduls 14 um die zweite Achse 36 herum erlaubt eine Leuchtweitenregulierung. Auch hier gilt, dass der für diese Funktion erforderliche Stellantrieb bevorzugt ein Elektromotor ist. Ferner gilt auch hier, dass der Stellantrieb alternativ mit dem Schwenkrahmen mitschwenkend und sich an dem Gehäuse abstützend an dem Schwenkrahmen 28 befestigt ist oder dass der Stellantrieb nicht mitschwenkend und sich an dem Schwenkrahmen 28 abstützend an dem Gehäuse befestigt ist.

Bei der vorliegenden Erfindung geht es um die Verwirklichung der ersten Lagerung 30 und/oder der zweiten Lagerung 32, in denen die Komplexlichtquelle innerhalb des Schwenkrahmens um die erste Achse schwenkbar gelagert ist.

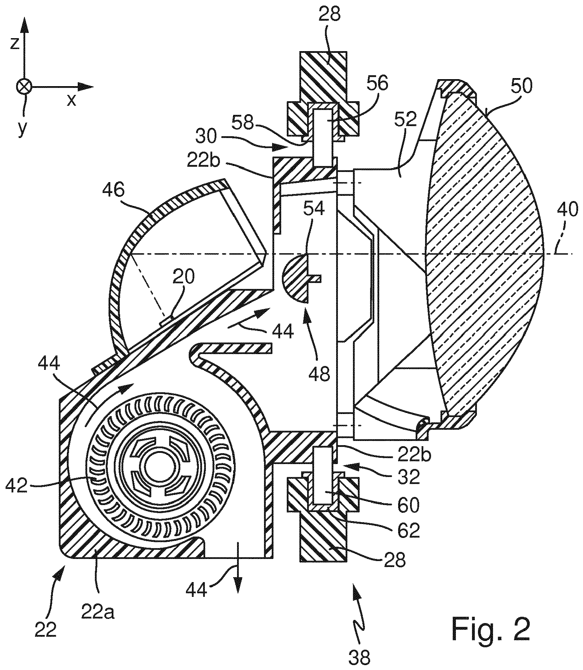

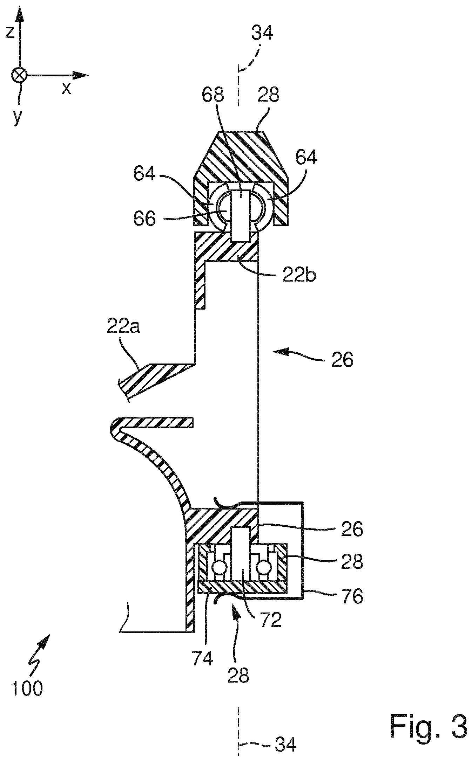

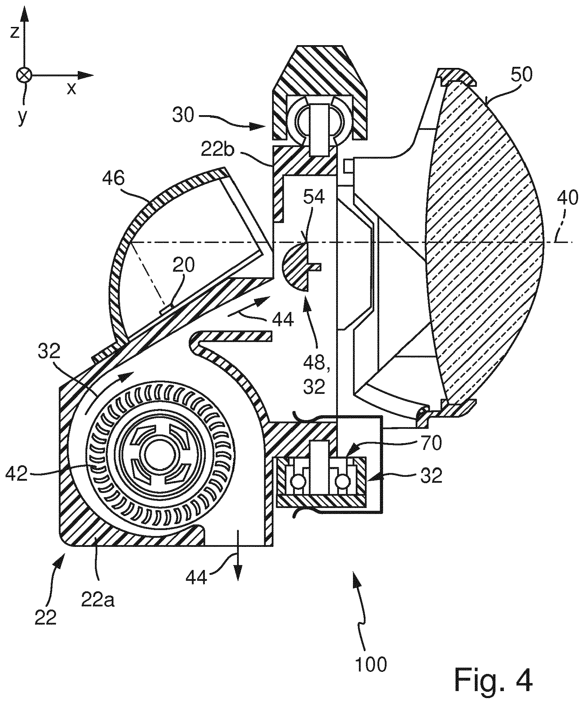

Im Folgenden wird unter Bezug auf die Fig. 2 zunächst ein längs einer optischen Achse aufgeschnittenes Kurvenlichtmodul mit einer bekannten Lagerung der Komplexlichtquelle im Schwenkrahmen vorgestellt, bevor weiter unten unter Bezug auf die Figuren 3 und 4 ein Ausführungsbeispiel eines erfindungsgemäßen Kurvenlichtmoduls erläutert wird.

Die Fig. 2 zeigt ein Beispiel eines Projektions-Kurvenlichtmoduls, das eine Blendenwalze zur Erzeugung einer Hell-Dunkel-Grenze aufweist. Dabei zeigt die Figur 2 ein Kurvenlichtmodul 38, das beim Gegenstand der Figur 1 das Lichtmodul 14 ersetzt. In Verbindung mit den übrigen Merkmalen des Gegenstands der Figur 1 ergibt das Kurvenlichtmodul 38 einen Kraftfahrzeugscheinwerfer. Das Kurvenlichtmodul 38 ist in einem entlang seiner optischen Achse 40 vollzogenen Längsschnitt dargestellt.

Im Einzelnen weist das Kurvenlichtmodul 38 eine Lichtquelle 20 und ein Trägerelement 22 auf. Das Trägerelement 22 hat bei der dargestellten Ausgestaltung unter anderem auch die Funktion eines Gehäuses für ein Gebläse 42, das einen Luftstrom 44 erzeugt. Dies ist jedoch nicht zwingend. Bei einer bevorzugten Ausgestaltung werden neben der Halbleiterlichtquelle 20 weitere Komponenten des Kurvenlichtmoduls 38 an der kompakten und stabilen Struktur des Trägerelements 22 befestigt. Beim Gegenstand der Fig. 2 sind dies optische Elemente in Form eines Reflektors 46, eine Blendenwalze 48 mit ihrem Antrieb und ihrer Lagerung, insbesondere einem Elektromotor, und eine Projektionslinse 50, die über einen Linsenträger 52 an dem Trägerelement 22 befestigt ist. Die Summe dieser Elemente 46, 48, 50 stellt eine Ausgestaltung des optischen Systems 24 aus der Fig. 1 dar.

Bei dem in der Figur 2 dargestellten Kurvenlichtmodul 38 weist die erste Lagerung 30 der Komplexlichtquelle 26 in dem Schwenkrahmen 28 einen ersten Lagerstift 56 auf, der in einer ersten Gleitlagerhülse 58 gelagert ist. Analog weist die zweite Lagerung 32 der Komplexlichtquelle 26 in dem Schwenkrahmen 28 einen zweiten Lagerstift 60 auf, der in einer zweiten Gleitlagerhülse 62 gelagert ist. Dabei sind die Lagerstifte 56 und 60 in der dargestellten Ausgestaltung Bestandteile der Komplexlichtquelle 26, während jede Lagerhülse 58, 62 jeweils ein Bestandteil des Schwenkrahmens 28 ist.

Wenn die erste Lagerung 30 nicht mit der zweiten Lagerung 32 fluchtet, kommt es bei dieser Art der Lagerung zu den eingangs beschriebenen Problemen. Ein Nicht-Fluchten bedeutet dabei, dass eine gedachte Mittellinie durch den ersten Lagerstift 56 nicht mit einer gedachten Mittellinie durch den zweiten Lagerstift 60 zusammenfällt, sondern dass diese Mittellinien einen Winkel miteinander einschließen oder parallel zueinander verlaufen oder zueinander windschief sind. Diese Probleme treten insbesondere dann auf, wenn der Schwenkrahmen 28 und/oder der Halterahmen 22b der Komplexlichtquelle 26 als Kunststoffspritzgussteile gefertigt werden, weil solche Teile einen mit sinnvollem Aufwand nicht vermeidbaren Verzug aufweisen.

Figur 3 zeigt einen Schnitt durch ein Kurvenlichtmodul 100, der von seiner Lage her dem Schnitt entspricht, der in der Fig. 2 dargestellt ist. Im Unterschied zu der Figur 2 ist in der Fig. 3 nicht ein kompletter Längsschnitt durch ein Kurvenlichtmodul dargestellt. Figur 3 zeigt vielmehr den Schnitt nur im Bereich der ersten Lagerung 30 und der zweiten Lagerung 32. Die Darstellung in der Figur 3 zeigt damit insbesondere Unterschiede zum Gegenstand der Figur 2, die sich aus der jeweiligen Art der Lagerung der Komplexlichtquelle 26 in dem Schwenkrahmen 28 ergeben.

Der Kern der Erfindung betrifft ein Kurvenlichtmodul 100 für einen Kraftfahrzeugscheinwerfer, mit einem Schwenkrahmen 28 und einer Komplexlichtquelle 26, die in einer ersten Lagerung 30 und einer zweiten Lagerung 32 in dem Schwenkrahmen 28 um eine Achse 34 schwenkbar gelagert ist. Das erfindungsgemäße Kurvenlichtmodul 100 weist eine vorteilhafte Realisierung der Lagerung auf. Diese zeichnet sich nämlich dadurch aus, dass wenigstens eine der beiden Lagerungen 30, 32 eine Kalottenlagerung mit einer Kugelkalotten-förmigen Lagerschale, einer Kugel und einem Lagerstift aufweist. Dabei hat die Kugel eine mittige Ausnehmung, die als Gleitlagerhülse dient, in der der erste Lagerstift 68 drehbar gelagert ist. Die Lagerung umfasst daher zwei insgesamt zwei miteinander in Beziehung stehende einzelne Lagerungen. Von innen nach außen sind dies zunächst eine Gleitlagerung des Lagerstiftes in der mittigen, bevorzugt zylinderförmigen Ausnehmung der Kugel und dann, weiter außen, eine Gleitlagerung der Kugel in der Kalotten-förmigen Lagerschale.

Die mittige Ausnehmung in der Kugel 66 bildet für den ersten Lagerstift 68 eine Gleitlagerhülse. Mit anderen Worten: die mittige Ausnehmung und der erste Lagerstift 68 sind aufeinander abgestimmt dazu eingerichtet, miteinander ein Gleitlager zu bilden. Bei einer Schwenkbewegung der Komplexlichtquelle findet eine Drehbewegung in diesem Gleitlager statt. Die aus der Lagerschale 64 und der Außenfläche der Kugel 66 gebildete Lagerflächenpaarung dient dazu, Bewegungen zu erlauben, die bei Fluchtungsfehlern zu einer Spannung im Gleitlager führen würden. Wenn Spannungskräfte kippend auf den in der Ausnehmung der Kugel gleitend gelagerten Lagerstift 68 einwirken, löst dies eine Drehung der Kugel in der Lagerschale aus, was eine Verkippung der mittigen Ausnehmung und damit eine Verkippung der Gleitlagerhülse erlaubt, die der Verkippung des Lagerstifts folgt. Als erwünschte Folge werden die Spannungskräfte reduziert, die zwischen der hier von der mittigen Ausnehmung gebildeten Lagerhülse und dem Lagerstift wirken.

In der Ausgestaltung, die in der Figur 3 dargestellt ist, wird die obere Lagerung als erste Lagerung 30 in Form einer Kalottenlagerung verwirklicht. Die Bezeichnung als obere Lagerung bezieht sich dabei auf ihre Lage im Raum bei einer bestimmungsgemäßen Verwendung des Kurvenlichtmoduls in einem Scheinwerfer in einem Kraftfahrzeug. Bei einem Lichtmodul, das bei seiner bestimmungsgemäßen Verwendung eine horizontal verlaufende Hell-Dunkel-Grenze erzeugt, definiert der helle Bereich der Lichtverteilung einen unteren Bereich und der dunkle Bereich der Lichtverteilung einen oberen Bereich, so dass eine Unterscheidung zwischen oben und unten anhand der vom Lichtmodul erzeugten Lichtverteilung erlaubt.

Dazu weist die obere Lagerung 30 eine Kugelkalotten-förmige Lagerschale 64 mit einer darin aufgenommenen Kugel 66 sowie einen ersten Lagerstift 68 auf. Die Kugel 66 weist eine mittige Ausnehmung auf, die dazu eingerichtet ist, den ersten Lagerstift 68 aufzunehmen. Wenn die Kugelkalotten-förmige Lagerschale 64 und die Kugel 66 Bestandteile des Schwenkrahmens 28 sind, dann ist der zugehörige erste Lagerstift 68 ein Bestandteil der Komplexlichtquelle 26. Wenn die Kugelkalotten-förmige Lagerschale 64 und die Kugel 66 Bestandteile der Komplexlichtquelle 26 sind, dann ist der zugehörige erste Lagerstift 68 ein Bestandteil des Schwenkrahmens 28. Figur 3 zeigt eine Ausgestaltung, bei der die Kugelkalotten-förmige Lagerschale 64 und die Kugel 66 Bestandteile des Schwenkrahmens 28 und der zugehörige erste Lagerstift 68 ein Bestandteil der Komplexlichtquelle 26 ist.

In der Ausgestaltung, die in der Figur 3 dargestellt ist, wird die zweite Lagerung 32 durch ein eingepresstes Kugellager 70 verwirklicht.

In der dargestellten Ausgestaltung weist die zweite Lagerung 32 neben dem Kugellager 70 einen zweiten Lagerstift 72 auf, der von dem Kugellager 70, beziehungsweise von dem Innenring des Kugellagers 70 aufgenommen wird. Wenn das Kugellager 70 ein Bestandteil des Schwenkrahmens 28 ist, dann ist der zugehörige zweite Lagerstift 72 ein Bestandteil der Komplexlichtquelle 26. Dies entspricht der dargestellten Ausgestaltung. Wenn das Kugellager 70 dagegen ein Bestandteil der Komplexlichtquelle 26 ist, dann ist der zugehörige zweite Lagerstift 72 ein Bestandteil des Schwenkrahmens 26.

Das Kugellager 70 ist mit seinem äußeren Lagerring auf der unteren Seite des Kurvenlichtmoduls 14 in den Schwenkrahmen 28 eingepresst. Der Innenring des Kugellagers 70 nimmt den vorteilhafterweise als Kreuz ausgeführten zweiten Lagerstift 42b der Komplexlichtquelle 26 festsitzend auf. Der Festsitz wird dadurch erzeugt, dass der zweite Lagerstift 42b bevorzugt mit leichtem Übermaß zum Innendurchmesser des Innenrings des Kugellagers 70 an die Komplexlichtquelle 26 einstückig angespritzt ist. Der zweite Lagerstift steht in dieser Ausgestaltung also ebenfalls aus Kunststoff. In einer nicht im Einzelnen dargestellten Ausgestaltung weist der zweite Lagerstift einen radialen Vorsprung, z. B. in Form einer Stufe auf, die zusammen mit dem Innenring einen Anschlag bildet, bis zu dem der zweite Lagerstift in den Innenring des Kugellagers 70 eingeführt ist. Dadurch wird insbesondere in Schwerkraftrichtung ein fester Sitz des zweiten Lagerstiftes erzielt. Das untere Kugellager 70 trägt also das Gewicht der Komplexlichtquelle. Die obere Kalottenlagerung ist daher vom Gewicht entlastet.

Das Kugellager 70 ist durch einen vorzugsweise mit dem Schwenkrahmen 28 verschraubten Lagerdeckel 74 in seiner Position gesichert. Eine selbstsichernd ausgeführte Bügelfeder 76 sichert die Komplexlichtquelle 26 gegen unbeabsichtigtes Aushängen des Systems bei überhöhten Beschleunigungswerten in Z-Richtung.

Die Kalottenlagerung lässt insbesondere eine Schiefstellung des zugehörigen Lagerstiftes, hier des ersten Lagerstiftes 68, zu. Achsfluchtungsfehler zwischen der ersten Lagerung 30 und der zweiten Lagerung 32 führen in jedem Fall zu einem verspannten Sitz der Lagerstifte 68, 72 in ihren Aufnahmen, sei es die Aufnahme in der Kugel der Kalottenlagerung oder die Aufnahme in dem Innenring des Kugellagers 70. Dieser verspannte Sitz führt zwangsläufig zu einer, wenn auch geringen, Schiefstellung der Lagerstifte 68, 72 relativ zueinander. Da die Kalottenlagerung eine solche Schiefstellung problemlos zulässt, treten dort, wie es weiter oben ausführlich erläutert worden ist, keine so hohen Flächenpressungswerte zwischen den Lagerflächen auf, wie es ohne eine Schiefstellungen tolerierende Lagerung der Fall wäre. Eine Schiefstellungen nicht tolerierende Lagerung ist zum Beispiel in der Fig. 2 dargestellt. Aufgrund der bei der Erfindung geringeren Flächenpressungswerte erlaubt die Erfindung auch eine verbesserte Einhaltung eines minimalen Lagerspiels bei tiefen Temperaturen.

Durch die Verwendung des Kalottenlagers für eine der beiden Lagerungen, insbesondere für die obere Lagerung, werden die Auswirkungen unvermeidbarer Verzugserscheinungen zwischen dem Schwenkrahmen 28 und dem Halterahmen 22b der Komplexlichtlichtquelle 26 auf die sich ergebenden Flächenpressungen in den Lagerungen verringert.

Um die gewünschte Genauigkeit zu erreichen, erfolgt die Verbindung zwischen der Komplexlichtquelle 26 und dem Kalottenlager des Schwenkrahmens 28 mittels eines Präzisions-Lagerstiftes, der in dem Halterahmen 22b der Komplexlichtquelle 26 gehalten wird und der in eine aus einem Kunststoff bestehende Kugel 66 eingreift die schwenkbar über die Lagerschale 64 mit dem Schwenkrahmen 28 verbunden ist. Der Präzisions-Lagerstift ist aus Metall. Der Präzisionslagerstift ist durch Umspritzen eines Teils des Stiftes mit dem Material des Schwenkrahmens 28 fest mit diesem verbunden oder mit Übermaß in eine Ausnehmung im Halterahmen eingepresst.

Der Metallpass-Lagerstift 68 gewährleistet in Verbindung mit der Kugel 66 aus einem passend ausgesuchten Kunststoff eine über eine große Temperaturdifferenz spielarme Verbindung. Die Lagerschale 64 wird in einer bevorzugten Ausgestaltung durch Einschrauben in dem Schwenkrahmen 28 befestigt und weist zu diesem Zweck ein Außengewinde auf, dass zu einem Innengewinde in einer zur Aufnahme der Lagerschale 64 eingerichteten Ausnehmung in dem Schwenkrahmen 28 passt.

Die Figur 4 zeigt einen Querschnitt durch ein Ausführungsbeispiel eines erfindungsgemäßen Kurvenlichtmoduls zur Erläuterung von Ausgestaltungen der Erfindung. In der dargestellten Ausgestaltung ist die Lichtquelle 20 eine Halbleiterlichtquelle und sie ist thermisch mit dem Kühlkörper 22a des Trägerelements 22 gekoppelt. Das Trägerelement 22 weist bevorzugt ein Gebläse 42 mit einem Gebläsegehäuse auf, das aktiv einen Wärme von der Halbleiterlichtquelle 20 abführenden Luftstrom 44 erzeugt. Dabei wird die Kühlluft von dem Gebläse 42 aus einer zur Zeichnungsebene senkrechten Richtung angesaugt. Die Halbleiterlichtquelle 20 ist also an der kompakten und stabilen Struktur des Trägerelements 22 befestigt. Die Erfindung ist aber auch ohne Gebläse verwendbar, also bei einer passiven Kühlung, bei der keine aktive Erzeugung eines Kühlluftstroms stattfindet.

Die von der Halbleiterlichtquelle 20 erwärmte Luft 32 wird in der dargestellten Ausgestaltung in Richtung zur Projektionslinse 50 geblasen, wobei sie an der Blendenwalze 48 vorbeistreicht. Das Lichtmodul 100 ist also in dieser Ausgestaltung dazu eingerichtet, einen von einem Gebläse erzeugten Kühlluftstrom so zu führen, dass die Blende 48 zumindest zu einem Teil in dem Kühlluftstrom 44 liegt. Dies liefert den zusätzlichen Vorteil, dass die aufgeheizte Kühlluft Feuchtigkeit, die bei wechselnden Temperaturen und/oder Luftfeuchtigkeiten im Kraftfahrzeugscheinwerfer kondensieren kann, aufnimmt und mit dem Luftstrom aus dem Kraftfahrzeugscheinwerfer herausträgt.

Mit der zur Projektionslinse 50 geblasenen Luft ist weiter der Vorteil verbunden, dass diese Luft an der Blendenwalze 48 vorbeistreicht und damit Wärme von der Blendenwalze 48 abführen kann, wenn sich diese aufgeheizt haben sollte. Ein weiterer Vorteil besteht darin, dass das Gebläse 42 für eine Temperaturnivellierung sorgt, also ausgleichend auf Temperaturunterschiede innerhalb des Kurvenlichtmoduls 100 wirkt. Ein aufgrund von unterschiedlichen Temperaturen verschiedener Bereiche des Halterahmens 22b und/oder des Schwenkrahmens 28 bedingter Verzug, der zu einer Verspannung der Lagerungen 30, 32 führt, wird dadurch verringert. Damit wird auch die verzugsbedingte Flächenpressung zwischen den Lagerflächen der beiden Lagerungen 30, 32 vermindert.

Es ist daher bevorzugt, dass das Projektions-Lichtmodul 100 ein Kühlgebläse 42 aufweist und dass wenigstens ein Teil der vom Kühlluftgebläse 42 geförderten Kühlluft so geführt wird, dass sie zumindest auch Wärme von der Blendenwalze 48 abführen kann.

Darüber hinaus zeigt die Fig. 4 eine Aufteilung der Gebläseabluft auf mehrere Teilströme 44, wodurch zusätzlich zum Beispiel benachbarte Wärmequellen gekühlt werden können. Benachbarte Wärmequellen können zum Beispiel ein Lichtfunktionen steuerndes Steuergerät des Scheinwerfers und/oder um eine zugehörige Endstufenanordnung sein, wobei diese Aufzählung nicht abschließend sein soll. Auch dieses Merkmal trägt zu einer Nivellierung der Temperaturunterschiede innerhalb des Kurvenlichtmoduls 100 bei.

Das Trägerelement 22 setzt sich in einer bevorzugten Ausgestaltung aus einem als Kühlkörper 22a dienenden ersten Teil und einem als Halterahmen 22b dienenden zweiten Teil zusammen. Der erste Teil besteht bevorzugt aus einem gut wärmeleitfähigen Metall, um als Kühlkörper 22a für die Halbleiterlichtquelle und bevorzugt auch als Gebläsegehäuse dienen zu können. Bei diesem Teil kommt es insbesondere auf die thermischen Eigenschaften und die Festigkeit an.

Das zweite Teil dient zur Befestigung und/oder Aufnahme und/oder Lagerung weiterer Teile des Projektions-Lichtmoduls wie der Lagerung der Blendenwalze und Befestigung ihres Antriebs. Bei diesem Teil ist es vorteilhaft, wenn sich komplexe Befestigungsstrukturen wie Formschlusselemente wie Rastnasen und dergleichen ohne großen Aufwand herstellen lassen. Diese Forderung wird insbesondere durch Spritzgussteile aus Kunststoff oder einem Kunststoff-Verbundmaterial erfüllt.

Es ist daher bevorzugt, dass das der zweite Teil des Trägerelements 22, also der Halterahmen 22b, aus einem solchen Material besteht. Die Befestigung des Halterahmens 22b an dem Kühlkörper 22a erfolgt zum Beispiel durch Schraubverbindungen. In einer besonders bevorzugten Ausgestaltung erfolgt die Befestigung jedoch dadurch, dass ein Abschnitt des Kühlkörpers 22a in eine Kunststoffspritzgussform des Halterahmens 22b eingelegt und mit Kunststoffmaterial des Halterahmens 22b umspritzt wird, so dass nach dem Erkalten und Aushärten eine nicht mehr zerstörungsfrei lösbare Verbindung zwischen dem Kühlkörper 22a und dem Halterahmen 22b besteht. Dadurch werden die Lagetoleranzen zwischen den einzelnen Bestandteilen des optischen Systems 22, die, wie die Lichtquelle 20 und der Reflektor 46 an dem Kühlkörper befestigt sind, oder die, wie die Blendenwalze 48 und die Projektionslinse 50, an dem Halterahmen 22b befestigt sind, klein gehalten.

Darüber hinaus wird durch das Umspritzen ein sehr guter thermischer Kontakt zwischen dem Kühlkörper 22a und dem Halterahmen 22b hergestellt, der ebenfalls zu einer Nivellierung der Temperaturunterschiede innerhalb des Kurvenlichtmoduls und insbesondere den beiden Lagerungen beiträgt.

Sowohl das Material der Blendenwalze als auch das Material des Halterahmens bestehen bevorzugt aus einem gut wärmeleitenden Kunststoffverbundwerkstoff.

Durch die thermische Ankopplung des Halterahmens 22b an den Kühlkörper 22a übernimmt der Halterahmen 22b auch Kühlkörperfunktionen. Er nimmt also Wärme aus dem Kühlkörper 22a auf. Durch die gute Wärmeleitung wird diese Wärme auch dazu dienen, die beiden Lagerungen im Betrieb der Lichtquelle zu erwärmen, was den weiter oben als problematisch beschriebenen Effekt der Lagerspieldegradation bei tiefen Temperaturen vorteilhafterweise verringert.

Die Blendenwalze ist allgemein ein Teil eines Projektionssystems und ist dort zwischen einer Primäroptik, hier dem Reflektor 46, und einer Sekundäroptik, hier der Projektionslinse 50 angeordnet.

Bei einem Projektionssystem bündelt die Primäroptik Licht einer Lichtquelle, hier der Halbleiterlichtquelle 20, in ein kleines Volumen innerhalb des Lichtmoduls 38, das sich auf der Höhe der optischen Achse 40 im Lichtweg zwischen der Primäroptik und der Sekundäroptik befindet. Mit anderen Worten: Die Primäroptik ist auf das kleine Volumen fokussiert. Dies leistet zum Beispiel eine Anordnung aus einem Ellipsoidreflektor und einer Lichtquelle, die in einem ersten Brennpunkt des Reflektors angeordnet ist, wenn sich das kleine Volumen im zweiten Brennpunkt, bzw. Brennbereich des Reflektors befindet. Die Sekundäroptik ist ebenfalls auf das kleine Volumen fokussiert und projiziert die sich in dem kleinen Volumen einstellende Lichtverteilung in das Vorfeld des Lichtmoduls. Eine Blendenkante 54, die sich innerhalb des kleinen Volumens befindet, wird dann durch die Sekundäroptik als Hell-Dunkel-Grenze in der in das Vorfeld projizierten Lichtverteilung abgebildet. Anstelle eines Reflektors als Primäroptik kann auch eine Licht der Lichtquelle fokussierende Linse oder eine mit interner Totalreflexion arbeitende Vorsatzoptik als Primäroptik verwendet werden.

In einer bevorzugten Ausgestaltung ist die Blendenwalze 48 um eine horizontale, senkrecht zur optischen Achse 40 und bevorzugt parallel zu einer bei einer bestimmungsgemäßen Verwendung des Lichtmoduls 38 horizontal verlaufenden Drehachse drehbar gelagert und weist auf ihrem Umfang verschiedene Konturen auf, die durch die Sekundäroptik auf die Straße projiziert werden und dabei verschiedene Hell-Dunkel-Grenzen darstellen.

Die Blendenwalze wird etwa auf ihrer ganzen Länge durch die Primäroptik beleuchtet. Der unterhalb der Blendenkante 54 liegende Bereich der Lichtverteilung oder Beleuchtung wird dabei durch die Blendenwalze 48 abgeschattet und erscheint als dunkler Bereich in der auf die Straße projizierten Lichtverteilung. Die Blende liegt damit sowohl im Fokus der Primäroptik als auch im Fokus der Sekundäroptik. Das kleine Volumen, in das die Primäroptik das Licht fokussiert hat eine Fläche, die typischerweise kleiner bis gleich der oberen Hälfte der Querschnittsfläche der Blendenwalze bei einem längs ihrer Drehachse erfolgende Schnitt ist. Dies ist in einem Beispiel eine Fläche von etwa ca. 50 mm * 5 mm.

Das aus diesem kleinen Querschnitt austretende Licht wird durch die Sekundäroptik, in der dargestellten Ausgestaltung also durch die Projektionslinse 50, in die breite Lichtverteilung auf der Fahrbahn gestreut. Das bedeutet umgekehrt, dass von außen über die Sekundäroptik in das Projektionslichtmodul 100 einfallende Strahlung, also nicht nur sichtbares Licht, sondern auch Infrarotstrahlung und Ultraviolettstrahlung, entsprechend stark fokussiert wird. Diese Fokussierung kann zu thermischen Belastungen führen. Herkömmlicher Kunststoff hält diesen Belastungen unter ungünstigen Umständen, also bei hoher Strahlungsbelastung, nicht stand.

Um trotzdem die mit der Verwendung von Kunststoff einhergehenden Vorteile nutzen zu können, wird die Blendenwalze bevorzugt aus einem Verbundmaterial aus Kunststoff mit in den Kunststoff eingebetteten Zusätzen verwirklicht, wobei die Zusätze die Wärmeleitfähigkeit des Verbundmaterials gegenüber dem reinen Kunststoff erhöhen.

Als Grundmaterial für den Verbundwerkstoff kommt ein Polyetherimid (PEI)- Kunststoff wie Ultem in Frage. Polyetherimid (PEI) im allgemeinen und so auch Ultem zeichnet sich durch eine ausreichende Temperaturfestigkeit und eine sehr geringe Ausgasung aus. Die geringe Ausgasung hat den Vorteil, dass sich auch über der jahrelangen Betriebszeit in Kraftfahrzeugen keine Verschlechterung der optischen Eigenschaften durch eine Kondensation von ausgegastem Material auf einer Reflexionsfläche oder einer Transmissionsfläche des Projektions-Lichtmoduls ergibt.

Polyetherimide wie Ultem werden in reiner Form und mit verschiedenen Zusätzen angeboten. Das Material ist sehr beständig gegenüber UV-Strahlen und lässt sich im Spritzgießverfahren verarbeiten. Die Verarbeitungstemperatur liegt je nach Typ zwischen 320 und 400 °C, bei einer Werkzeugtemperatur zwischen 120 und 180 °C.

Als Zusätze werden bevorzugt Kohlefasern und/oder Metalloxide verwendet, letztere insbesondere in Pulverform. Die Zusätze werden bevorzugt so klein gemahlen, dass sie zusammen mit dem Kunststoffmaterial in einem Spritzgussvorgang gemeinsam verarbeitet werden können.

Durch die Verwendung von gut wärmeleitendem Material für die Blendenwalze ist es nicht nur möglich, effektiv Wärme von der Blendenwalze abzuführen, sondern es ist auch möglich diese Wärme zur Erwärmung der Lagerungen zu verwenden, was ebenfalls zur Vermeidung nachteiliger Wirkungen der Lagerspieldegradation bei tiefen Temperaturen entgegenwirkt.

Bei diesen Ausgestaltungen ergeben sich also einerseits kombinatorische Wirkungen insofern, als sie zu einer Nivellierung von Temperaturunterschieden im Kurvenlichtmodul beitragen und ferner auch insofern, als sie zu einer Vermeidung einer Lagerspieldegradation bei tiefen Temperaturen beitragen.

Andererseits müssen diese Merkmale bei der Erfindung nicht zwangsläufig verwirklicht sein, weil die Erfindung mit unterschiedlichen optischen Systemen 22, seien es Reflexionssysteme oder Projektionssysteme, verwendbar ist.

## Patentansprüche

1. Kurvenlichtmodul (100) für einen Kraftfahrzeugscheinwerfer (10), mit einem Schwenkrahmen (28) und einer Komplexlichtquelle (26), die in einer ersten Lagerung (30) und einer zweiten Lagerung (32) in dem Schwenkrahmen (28) um eine erste Achse (34) schwenkbar gelagert ist, wobei wenigstens eine der beiden Lagerungen (30, 32) einen in einer Gleitlagerhülse drehbar gelagerten Lagerstift aufweist, und wobei der Schwenkrahmen (28) mit dem Kurvenlichtmodul (14) zusätzlich um eine zur ersten Achse (34) orthogonale und
quer zu einer Lichtabstrahlrichtung liegenden zweite Achse (36) schwenkbar ist, wobei die wenigstens eine Lagerung eine Kalottenlagerung mit einer Kugelkalotten-förmigen Lagerschale (64) und einer Kugel (66) aus Kunststoff ist, die eine mittige Ausnehmung aufweist, die als die Gleitlagerhülse dient, so dass die wenigstens eine der beiden Lagerungen daher insgesamt zwei miteinander in Beziehung stehende einzelne Lagerungen umfasst, wobei dies, von innen nach außen zunächst eine Gleitlagerung des Lagerstiftes in der mittigen, bevorzugt zylinderförmigen Ausnehmung der Kugel und dann, weiter außen, eine Gleitlagerung der Kugel in der Kalotten-förmigen Lagerschale ist, **dadurch gekennzeichnet, dass** die Kugel (66) aus Kunststoff ist, dass die aus der Lagerschale (64) und der Außenfläche der Kugel (66) gebildete Lagerflächenpaarung dazu dient, Bewegungen zu erlauben, die bei Fluchtungsfehlern zu einer Spannung im Gleitlager führen würden, wobei die Verbindung zwischen der Komplexlichtquelle (26) und dem Kalottenlager des Schwenkrahmens (28) mittels eines Präzisions-Lagerstiftes (68) aus Metall erfolgt, der durch Umspritzen eines Teils des Stiftes mit dem Material eines Halterahmens (22b) fest mit diesem verbunden oder mit Übermaß in eine Ausnehmung im Halterahmen eingepresst ist, und dass die zweite Lagerung (32) durch ein eingepresstes Kugellager (70) verwirklicht ist.

2. Kurvenlichtmodul (100) nach Anspruch 1, **dadurch gekennzeichnet, dass** die Lagerschale (64) und die Kugel (66) einen Bestandteil des Schwenkrahmens (28) oder der Komplexlichtquelle (26) bilden und wobei der Lagerstift (68) einen Bestandteil der Komplexlichtquelle (26) bildet, wenn die Lagerschale (64) und die Kugel (66) einen Bestandteil des Schwenkrahmens (28) bilden, oder wobei der Lagerstift (68) einen Bestandteil des Schwenkrahmens (28) bildet, wenn die Lagerschale (64) und die Kugel (66) einen Bestandteil der Komplexlichtquelle (26) bilden.

3. Kurvenlichtmodul (100) nach Anspruch 1, **dadurch gekennzeichnet, dass** die erste Lagerung (30), die in Form einer Kalottenlagerung verwirklicht ist, eine obere der beiden Lagerungen (30, 32) ist, wobei sich die Bezeichnung als obere Lagerung auf ihre Lage im Raum bei einer bestimmungsgemäßen Verwendung des Kurvenlichtmoduls (100) in einem Scheinwerfer (10) in einem Kraftfahrzeug bezieht.

4. Kurvenlichtmodul (100) nach Anspruch 1, **dadurch gekennzeichnet, dass** die zweite Lagerung (32) neben dem Kugellager (70) einen zweiten Lagerstift (72) aufweist, der von dem Kugellager (70), beziehungsweise von dem Innenring des Kugellagers (70) aufgenommen wird.

5. Kurvenlichtmodul (100) nach Anspruch 4, **dadurch gekennzeichnet, dass** dann, wenn das Kugellager (70) ein Bestandteil des Schwenkrahmens (28) ist, der zugehörige zweite Lagerstift (72) ein Bestandteil der Komplexlichtquelle (26) ist.

6. Kurvenlichtmodul (100) nach Anspruch 4, **dadurch gekennzeichnet, dass** dann, wenn das Kugellager (70) ein Bestandteil der Komplexlichtquelle (26) ist, der zugehörige zweite Lagerstift (72) ein Bestandteil des Schwenkrahmens (28) ist.

7. Kurvenlichtmodul (100) nach einem der Ansprüche 4 bis 6, **dadurch gekennzeichnet, dass** das Kugellager (70) mit seinem äußeren Lagerring auf der unteren Seite des Kurvenlichtmoduls (100) in den Schwenkrahmen (28) eingepresst ist und dass der Innenring des Lagers (70) den als Kreuz ausgeführten zweiten Lagerstift (72) der Komplexlichtquelle (26) festsitzend aufnimmt.

8. Kurvenlichtmodul (100) nach einem der vorhergehenden Ansprüche, **dadurch gekennzeichnet, dass** der Halterahmen (22b) der Komplexlichtquelle (26) aus einem Kunststoffverbundwerkstoff besteht, der ein Kunststoffmaterial als Grundmaterial und zusätzlich Zusätze aufweist, die eine Wärmeleitfähigkeit des Verbundwerkstoffs gegenüber einer Wärmeleitfähigkeit des Grundmaterials erhöhen.

9. Kurvenlichtmodul (100) nach Anspruch 8, **dadurch gekennzeichnet, dass** der Halterahmen (22b) der Komplexlichtquelle (26) mit dem Kühlkörper (22a) ein nicht zerstörungsfrei trennbares Trägerelement (22) bildet, wobei der Kühlkörper (22a) aus Metall besteht und zu einem Teil mit Material des Halterahmens (22b) umspritzt ist.

## Claims

1. An adaptive light module (100) for a motor vehicle headlight (10), having a swivel frame (28) and a complex light source (26), which light source is supported in a first bearing (30) and in a second bearing (32) in the swivel frame (28) pivotably about a first axis (34), and at least one of the two bearings (30, 32) has a bearing pin supported rotatably in a slide bearing bush, and the swivel frame (28) with the dome-like bearing shell (14) is additionally pivotable about a second axis orthogonal to the first axis (34) and located transversely to a light projection direction, and the at least one bearing has a ball bearing with a ball-jointlike bearing shell (64) and a ball (66), which has a central recess that serves as a slide bearing bush, so that the at least one of the two bearings therefore includes a total of two individual bearings that are in relationship with one another, and this is, from the inside outward, first a slide bearing of the bearing pin in the central, preferably cylindrical recess of the ball and then, farther outward, a slide bearing of the ball in the dome-like bearing shell, **characterized in that** the ball (66) is of plastic; that the bearing surface pair formed of the bearing shell (64) and the outer surface of the ball (66) serves to permit movements which, in the event of alignment errors, would lead to a tension in the slide bearing, and the connection between the complex light source (26) and the ball bearing of the swivel frame (28) is effected by means of a precision bearing pin (68) of metal, which by spray-coating of a portion of the pin with the material of a mounting frame (22b) is connected firmly thereto or is press-fitted with an oversize into a recess in the mounting frame; and that the second bearing (32) is realized by means of a press-fitted ball bearing (70).

2. The adaptive light module (100) of claim 1, **characterized in that** the bearing shell (64) and the ball (66) form a component of the swivel frame (28) or of the complex light source (26), and the bearing pin (68) forms a component of the complex light source (26), when the bearing shell (64) and the ball (66) form a component of the swivel frame (28), or the bearing pin (68) forms a component of the swivel frame (28), when the bearing shell (64) and the ball (66) form a component of the complex light source (26) .

3. The adaptive light module (100) of claim 1, **characterized in that** the first bearing (30), which is realized in the form of a ball bearing, is an upper one of the two bearings (30, 32), and the designation as the upper bearing refers to its position in space in an intended use of the adaptive light module (100) in a headlight (10) in a motor vehicle.

4. The adaptive light module (100) of claim 1, **characterized in that** the second bearing (32), besides the ball bearing (70), has a second bearing pin (72), which is received by the ball bearing (70), or by the inner ring of the ball bearing (70).

5. The adaptive light module (100) of claim 4, **characterized in that** if the ball bearing (70) is a component of the swivel frame (28), the associated second bearing pin (72) is a component of the complex light source (26).

6. The adaptive light module (100) of claim 4, **characterized in that** if the ball bearing (70) is a component of the complex light source (26), the associated second bearing pin (72) is a component of the swivel frame (28).

7. The adaptive light module (100) of one of claims 4 through 6, **characterized in that** the ball bearing (70) is press-fitted with its outer bearing ring on the lower side of the adaptive light module (100) into the swivel frame (28); and that the inner ring of the bearing (70) in firmly seated fashion receives the second bearing pin (72), embodied in the form of as a cross, of the complex light source (26).

8. The adaptive light module (100) of one of the foregoing claims, **characterized in that** the mounting frame (22b) of the complex light source (26) comprises a plastic composite material, which has a plastic material as the basic material and additional additives which increase a thermal conductivity of the composite material compared to a thermal conductivity of the basic material.

9. The adaptive light module (100) of claim 8, **characterized in that** the mounting frame (22b) of the complex light source (26), with the cooling element (22a) forms a non-indestructible, separable support element (22), and the cooling element (22a) consists of metal and is spray-coated partially with material of the mounting frame (22b) .

## Revendications

1. Module lumineux en courbe (100) pour un phare de véhicule automobile (10), avec un cadre pivotant (28) et une source lumineuse complexe (26) qui et montée pivotante sur le cadre pivotant (28), dans un premier palier (30) et un deuxième palier (32), autour d'un premier axe (34), au moins un des deux paliers (30, 32) comprenant un axe de support monté pivotant dans une douille de palier et le cadre pivotant (28) avec le module lumineux en courbe (14) étant monté de façon à pouvoir pivoter en plus autour d'un deuxième axe (36) perpendiculaire au premier axe (34) et transversal à une direction d'émission de lumière, ledit au moins un palier étant un palier à calotte avec un coussinet de palier (64) en forme de calotte sphérique et une sphère (66) qui comporte un évidement central servant comme ladite douille de palier, si bien que ledit au moins un des deux paliers comprenne donc au total deux paliers individuels étant en rapport l'un avec l'autre, ceci étant, vu de l'intérieur vers l'extérieur, d'abord un montage coulissant de la douille de palier dans l'évidement central, de préférence de forme cylindrique, de la sphère et puis, davantage vers l'extérieur, un montage coulissant de la sphère dans le coussinet de palier en forme de calotte, **caractérisé en ce que** la sphère (66) est en matière synthétique, **en ce que** la paire de surfaces de palier constituée par le coussinet de palier (64) et la surface extérieure de la sphère (66) sert à permettre des mouvements qui, en cas de défaut d'alignement, causeraient des tensions dans le palier, la liaison entre la source lumineuse complexe (26) et le palier à calotte du cadre pivotant (28) étant établie à l'aide d'un axe de support à précision (68) en métal qui est lié rigidement au cadre pivotant (28) par surmoulage d'une partie de l'axe avec le matériau du cadre de support (22b) ou qui, étant surdimensionné, est pressé dans un évidement dans le cadre de support, et **en ce que** le deuxième palier (32) est réalisé par un roulement à billes (70) incorporé sous pression.

2. Module lumineux en courbe (100) selon la revendication 1, **caractérisé en ce que** le coussinet de palier (64) et la sphère (66) constituent des parties intégrantes du cadre pivotant (28) ou de la source lumineuse complexe (26), l'axe de support (68) constituant une partie intégrante de la source lumineuse complexe (26) lorsque le coussinet de palier (64) et la sphère (66) constituent une partie intégrante du cadre pivotant (28), et l'axe de support (68) constituant une partie intégrante du cadre pivotant (28) lorsque le coussinet de palier (64) et la sphère (66) constituent une partie intégrante de la source lumineuse complexe (26).

3. Module lumineux en courbe (100) selon la revendication 1, **caractérisé en ce que** le premier palier (30) qui est réalisé sous la forme d'un palier à calotte, est un palier supérieur des deux paliers (30, 32), la désignation comme palier supérieur faisant référence à sa position dans l'espace lors d'une utilisation du module lumineux en courbe (100), conformément à l'usage prévu, dans un phare de véhicule automobile (10) dans un véhicule automobile.

4. Module lumineux en courbe (100) selon la revendication 1, **caractérisé en ce que** le deuxième palier (32) comprend, outre le roulement à billes (70), un deuxième axe de support (72) qui est reçu par le roulement à billes (70) ou respectivement par la bague intérieure du roulement à billes (70).

5. Module lumineux en courbe (100) selon la revendication 4, **caractérisé en ce que**, lorsque le roulement à billes (70) est une partie intégrante du cadre pivotant (28), le deuxième axe de support (72) associé est une partie intégrante de la source lumineuse complexe (26).

6. Module lumineux en courbe (100) selon la revendication 4, **caractérisé en ce que**, lorsque le roulement à billes (70) est une partie intégrante de la source lumineuse complexe (26), le deuxième axe de support (72) associé est une partie intégrante du cadre pivotant (28).

7. Module lumineux en courbe (100) selon l'une des revendications 4 à 6, **caractérisé en ce que** le roulement à billes (70) est pressé, avec sa bague extérieure de palier, du côté inférieur du module lumineux en courbe (100), dans le cadre pivotant (28), et **en ce que** la bague intérieure de palier du palier (70) reçoit de manière solidaire le deuxième axe de support (72), réalisé en forme de croix, de la source lumineuse complexe (26).

8. Module lumineux en courbe (100) selon l'une des revendications précédentes, **caractérisé en ce que** le cadre de support (22b) de la source lumineuse complexe (26) est réalisé en un matériau synthétique composite qui comprend un matériau synthétique comme matériau de base et, de manière supplémentaire, des adjuvants qui augmentent une conductivité thermique du matériau composite par rapport à une conductivité thermique du matériau de base.

9. Module lumineux en courbe (100) selon la revendication 8, **caractérisé en ce que** le cadre de support (22b) de la source lumineuse complexe (26) constitue, ensemble avec le radiateur (22a), un élément de support (22) non séparable sans destruction, le radiateur (22a) étant en métal et étant surmoulé partiellement avec du matériau du cadre de support (22b).
